Europäisches Patentamt

European Patent Office

Office européen des brevets

(11) Publication number: **0 508 225 A2**

# EUROPEAN PATENT APPLICATION

(21) Application number: **92105187.6**

(22) Date of filing: **26.03.92**

(51) Int. Cl.5: **G10L 5/06**

(30) Priority: **11.04.91 DE 4111781**

(43) Date of publication of application:
**14.10.92 Bulletin 92/42**

(84) Designated Contracting States:
**AT BE CH DE DK FR GB LI LU NL SE**

(71) Applicant: **International Business Machines Corporation**
**Old Orchard Road**
**Armonk, N.Y. 10504(US)**

(72) Inventor: **Bandara, Upali, Dr.**
**Tingueux-Allee 17**
**W-6906 Leimen(DE)**
Inventor: **Hitzenberger, Ludwig, Dr.**
**Nadelspitzweg 19**
**W-8419 Schoenhofen(DE)**
Inventor: **Keppel, Eric, Dr.**
**Ladenburger Strasse 23**
**W-6954 Hirschberg(DE)**
Inventor: **Mohr, Karlheinz**
**Egerlandstrasse 5**
**W-6920 Sinsheim(DE)**
Inventor: **Schmidt, Rudolf**
**Odenwaldstrasse 47/4**
**W-Heidelberg(DE)**
Inventor: **Walch, Georg, Dr.**
**Valentinianstrasse 74**
**W-6802 Ladenburg(DE)**
Inventor: **Wothke, Klaus, Dr.**
**Kastellweg 15**
**W-6900 Heidelberg(DE)**

(74) Representative: **Schäfer, Wolfgang, Dipl.-Ing.**
**European Patent Attorney, IBM Deutschland GmbH, Schönaicher Strasse 220**
**W-7030 Böblingen(DE)**

(54) **Computer system for speech recognition.**

(57) A computer system for speech recognition is described which, using a microphone, an acoustic transducer and a processor, converts speech text into digitized phonemes. By means of training texts, the phonemes and the words to be recognized by the computer system are stored in a memory means. In conjunction with a text subsequently dictated by the speaker, the uttered and the stored phonemes are compared. Using statistical methods and models, the computer system detects those phonemes and, based thereon, the speaker's utterance. There are natural phonemes, meaning actual utterances, and artificial phonemes which are artificially generated by the computer system in the training phase. Thus, an artificial phoneme is provided which is associated with pauses occurring between the components of a compound word. By detecting this interval, the word can be split into its components which are separately processed. Also provided are artificial phonemes resembling at least two natural phonemes. This allows combining different phoneme sequences of one and the same word to a single phoneme sequence. By using artificial phonemes, the memory space required is reduced. At the same time, the compare steps for the uttered and stored phonemes are reduced, which increases the processing speed of the computer sytem.

FIG. 1

The invention concerns a computer system for speech recognition, comprising means for converting spoken words into sounds (phonemes), means for storing words in a phonetic representation (phonetic baseform), the phonetic baseform including a number of natural phonemes, and means for comparing the converted and the stored phonemes.

Such computer systems for speech recognition are known from the art and are used mostly as automatic dictating machines. The text is dictated by the speaker into a microphone and converted into electric signals. The electric signals are used by the computer system to generate digitized phonemes corresponding to the speech text. The digitized phonemes are then compared with digitized phonemes previously generated in a training phase and stored in a memory of the computer system. During the training phase, a plurality of words, i.e. their correct letter sequence and the associated speaker-dependent phoneme sequence, are stored in the computer memory. With the aid of the probability calculus, the computer system first looks for those phonemes and then for those words in memory which are most likely to concur with the speech text. The words thus recognized are finally checked as to textual context and, if necessary, corrected. As a result, the dictated text is recognized by the computer system and may be processed further, for example, by a text processing system, displayed or printed.

A major problem with computer systems used for speech recognition is to store in their memories a vocabulary of the words to be recognized. This problem is particularly pronounced with the German language amongst others for two reasons. On the one hand, the German language comprises a plurality of compound words which all have to be stored individually. Thus, for instance, it is necessary to store not only the word "Fahrkartenschalter" but also its components "Fahrkarte", "Karte" and "Schalter", as well as other words including such components, for instance, "Schalterstunde", "Fahrstunde", etc. On the other hand, there are numerous German dialects with greatly varying pronunciations of the same word. As such phonological variations cannot be stored in the computer memory as a single phoneme sequence, it is necessary instead to store several phoneme sequences for one and the same word for each dialect. Consequently, a computer system used for speech recognition in the German language has to store a very large number of words. Apart from the fact that the memory space of a computer system is limited, the disadvantage of storing a large number of words is that the compare process of the words dictated by the speaker with those stored in memory is greatly slowed down, so that the computer system is no longer able to "follow" the speaker. The speaker has to "wait" for the computer system to catch up, which in practice adversely affects the computer's application for speech recognition.

It is the object of the invention to provide a computer system for speech recognition which is sufficiently fast to readily follow the text dictated by a speaker.

According to the invention, this object is accomplished such that the phonetic baseforms of the words in a computer system of the previously described kind also comprise a number of artificial phonemes.

Artificial phonemes are phonemes which the speaker does not utter as such. During the training phase of the computer system, these phonemes are artificially generated by the computer system depending on how particular words are pronounced by the speaker. Such artificial phonemes have the advantage that they allow words to be represented as phonetic baseforms which consume less memory space than phonetic baseforms of natural phonemes. This greatly reduces the memory space needed for storing the vocabulary to be recognized by the computer and the time required by the computer system for recognizing the speech text. As a result, the computer system is able to "follow" the text dictated by the speaker and perform its recognition tasks in the real time mode.

One embodiment of the invention is characterized in that a first silent phoneme, associated with the pause between two words, is provided as a natural phoneme, and that a second silent phoneme, associated with the pause between two components of a compound word, is provided as an artificial phoneme.

By means of the second, artificial, phoneme, the computer system detects the interface between two components of a compound word. The compound word may be split into its components and each component may be individually processed in and recognized by the computer system. Thus, instead of storing the compound word "as a whole" in the computer memory, it is sufficient to store its components. Storing compound words as such is no longer necessary. The advantage of this is that when the words dictated by the speaker are compared with stored words, the time required for this purpose is greatly reduced.

Another embodiment of the invention provides for an artificial phoneme which resembles at least two natural phonemes. According to this embodiment, a word or a component of a compound word whose phonetic baseform may differ with regard to the sequence of similar natural phonemes in at least two ways is represented by the associated phoneme(s).

Such an artificial phoneme allows representing phonological variations of one and the same word as a single phonetic baseform. Therefore, to account for dialectal differences in the pronunciation of the same word, it is no longer necessary to store several phonetic baseforms in the computer memory but only one single baseform comprising artificial in addition to natural phonemes. Multiple storage operations for one and the same word are thus eliminated.

Further embodiments of the invention may be seen from the patent claims as well as from the subsequent description of examples of the invention, which are described by way of drawings. The numerical values appearing in the description of the examples have proved advantageous in practice, so that detailed explanations have been omitted.

Fig. 1    is a simplified block diagram of a computer system for speech recognition;

Fig. 2    is a diagram showing an electric speech signal with time;

Fig. 3    is a diagram showing a spectrum of the speech signal of Fig. 2 with frequency;

Fig. 4    is assumed to show a multi-dimensional space with dot clusters;

Fig. 5    is a table in which particular label sequences are associated with a number of phonemes, and

Fig. 6    is a table in which particular phoneme sequences are associated with a number of words.

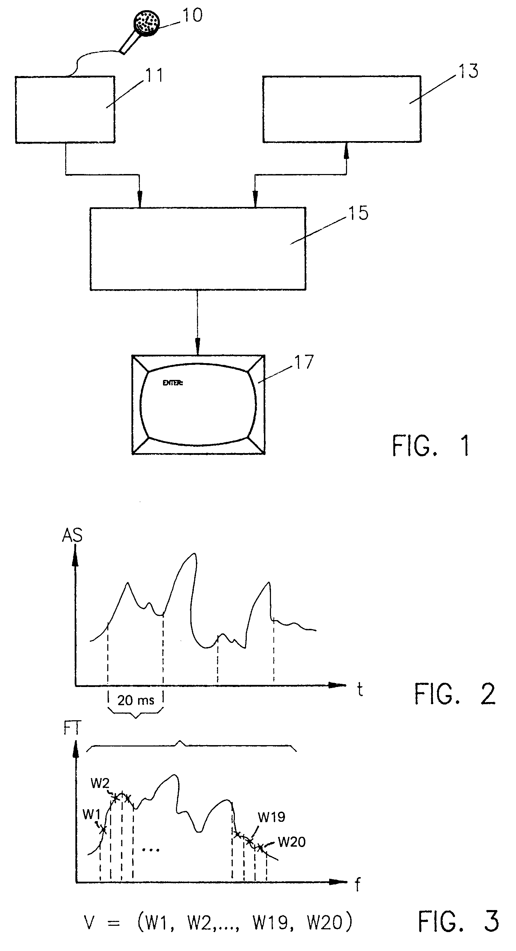

The computer system for speech recognition illustrated in Fig. 1 comprises a microphone 10 which is connected to an acoustic transducer 11. The transducer 11 is linked to a processor 15. Also provided is a memory 13 which is connected to processor 15. Processor 15 finally is connected to a display unit 17.

In response to a speaker speaking into the microphone 10 an electric amplitude signal AS is generated which is shown with the time t in Fig. 2. This amplitude signal AS is Fourier-transformed, with time frames of 20 ms duration forming one Fourier spectrum. Such a Fourier spectrum FT is shown with the frequency f in Fig. 3. The Fourier spectrum FT of Fig. 3 is associated with the amplitude signal AS in the first 20 ms time frame shown in Fig. 2. Each Fourier spectrum FT is subdivided into 20 bands, each representing the value of the associated Fourier spectrum FT. Thus, for each of the 20 ms time frames of the amplitude signal AS there is a vector V with the 20 values W1, W2, ... W19, W20 of the associated Fourier spectrum FT.

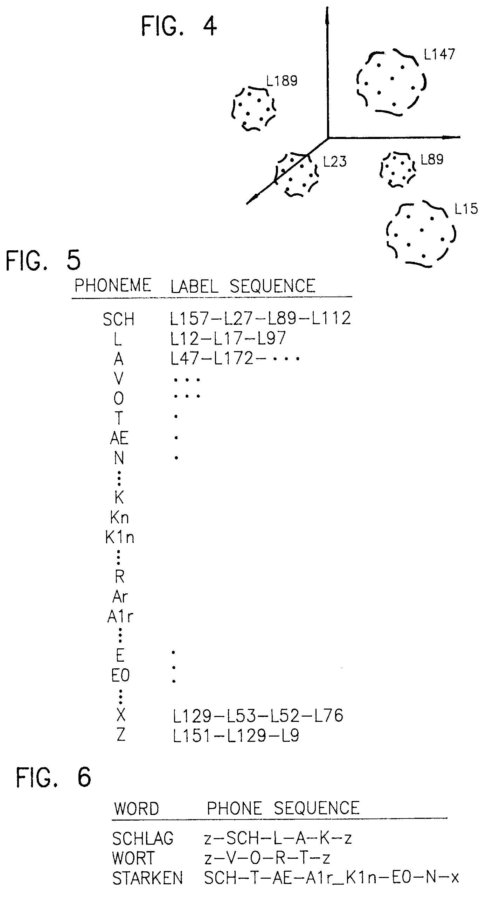

The axes in Fig. 4 represent a multi-dimensional space. This space shown as 3-dimensional in the figure is assumed to be 20-dimensional (unrepresentable as such) for the present invention.

A plurality of dots are entered into such a 20-dimensional space. Each dot corresponds to a vector V, with the position of the dot in the 20-dimensional space being defined by the 20 values of the vector V. Thus, the 20-dimensional space of Fig. 4 contains the respective Fourier spectra FT of successive 20 ms time frames of the amplitude signal AS.

It has been found however that the dots entered in the 20-dimensional space of Fig. 4 are not uniformly distributed but that they appear in clusters. These clusters are speech-dependent so that the clusters for the German language differ from those of the French or the English language.

The clusters are numbered consecutively. This is shown in Fig. 4 by each cluster being associated with a label, such as L 15 or L 147. Thus 200 clusters are designated by 200 labels in this way.

Laboratory training ensures that the positions of the clusters in the 20-dimensional space are only language-dependent and substantially speaker-independent. For this training, 10 different speakers utter the various words to be recognized by the computer system. This information is used by the computer to determine the positions of the clusters by statistical methods and models (such as Markov).

Laboratory training is also used for the following purposes. The words to be recognized by the computer system are stored in memory 13 such that the spelling of a word is associated with a phonetic baseform. This phonetic baseform of a word consists of concatenated phonemes of which there are 60. Each phoneme is made up of a string of labels which are each associated with predetermined 20 ms time frames of the amplitude signal AS in Fig. 2. If, for example, the amplitude signal AS of Fig. 2 represents a single phoneme, this phoneme is represented with the aid of the Fourier spectrum FT (Fig. 3) by three labels in the 20-dimensional space of Fig. 4. During laboratory training, a substantially speaker-independent label sequence is generated for each phoneme by statistical methods and models. The association of the different label sequences with the total number of 60 phonemes is stored in memory 13 of the computer system.

Laboratory training is followed by speaker-dependent training. During the latter, the speaker utters a number of predetermined sentences. The uttered sentences are used by the computer system to adapt the speaker-independent label sequences obtained during laboratory training to specific speakers. Upon completion of the speaker-dependent training, memory 13 of the computer system stores a first table in which each of the 60 phonemes is related in a speaker-dependent fashion to the associated expected label sequence in the form of statistical models. This first table is shown in Fig. 5. Memory 13 of the computer system also stores a second table containing the associated phoneme sequence for each word to be recognized by the computer. This second table is shown in Fig. 6.

During speech recognition, the computer system uses the Fourier spectrum FT to generate a label sequence from the speech text. The computer compares this label sequence with the label sequences stored in the first table (Fig. 5). From this table the computer system selects those phonemes which are most likely to concur with the predetermined label sequence. The phonemes obtained are concatenated and compared with the phoneme sequences stored in the second table (Fig. 6). From this table, too, the computer system selects those words that are most likely to concur with the predetermined phoneme sequences. The computer system checks the various most likely combinations of phonemes and words, so that in most cases there will be several words which the computer system recognizes as text uttered by the same speaker.

By means of a speech model, a detailed description of which has been omitted, the computer system checks several successively recognized words and decides from context which text has most likely been uttered by the speaker. The text recognized by the computer system is then displayed by display unit 17.

As has been explained above, phonemes are used to derive phonetic baseforms and to enter the words into memory 13 of the computer system. For this purpose, natural and artificial phonemes are employed. Natural phonemes are those which the speaker actually utters. Artificial phonemes on the other hand are not uttered by the speaker but are artificially generated by the computer system depending upon the function associated with them. The label sequence representing the phonemes is obtained by laboratory and speaker-dependent training, regardless of whether the phonemes concerned are natural or artificial ones.

As a natural phoneme, associated with the speech pause between two successive words, a first silent phoneme x is provided. This phoneme is contained in the table of Fig. 5 and usually occurs at the end of a phoneme sequence pertaining to a word, as illustrated for the word "staerken" in the table of Fig. 6. In addition, an artificial phoneme is provided as a second silent phoneme z, which denotes the speech pause between two successive components of a compound word. The speech pause between two components of a compound word is substantially shorter than the speech pause between two words. In an extreme case, the speech pause between the components of a word may be almost 0.

By laboratory and speaker-dependent training it is possible to train the computer system not only with respect to the natural first silent phoneme x but also with respect to the artificial second silent phoneme denoting the speech pause between two components. To this end, the speakers utter predetermined compound words during the training phase, from which the computer system generates a label sequence for this second silent phoneme z by statistical methods and models.

If the computer system subsequently spots this label sequence in a speech text it is able to deduce therefrom that the phonemes occurring before and after the second silent phoneme are components of a compound word. The artificial second silent phoneme z is treated in the same way as the natural first silent phoneme x. As a result, the compound word is split into its components which are separately processed by the computer system.

The second silent phoneme z is shown in the table of Fig. 5 along with an associated label sequence and also appears in the table of Fig. 6 in conjunction with the phoneme sequence of the words "Schlag" and "Wort" at the beginning and the end.

Without the artificial second silent phoneme z, it would be necessary to store all compound words along with their phoneme sequences in the memory of the computer system. This means that not only the words "Schlag" and "Wort" would have to be stored but also, for instance, the words "Schlagwort", "Schlagball", "Gegenschlag", "Schlusswort", "Wortspiel", etc.

In contrast to this, by using the additional artificial second silent phoneme z, it is merely necessary to store the two words "Schlag" and "Wort" in memory 13. Whenever one of the two words appears as a component of a compound word, the compound word is split up, as previously described, by means of the second silent phoneme z and the respective component "Schlag" or "Wort" is separately recognized by the computer system.

By means of a further function, the split components are combined to a compound word. This may be done by the computer system recognizing from the context of the words that the components belong to a compound word. Alternatively, the split components may be indexed by means of the second silent phoneme z and combined accordingly later on

By using the artificial second silent phoneme z, the memory space required for compound words is substantially reduced. The computer system which for speech recognition compares the phoneme sequences of the various words stored in memory 13 with the phoneme sequences uttered by the speaker has to carry out much fewer comparisons and statistical computations connected therewith. As a result, the processing speed of the computer system is greatly increased.

The table of Fig. 5 shows a number of phonemes and their associated label sequence, such as the phonemes SCH, L, A, ... K, R, E, etc. The table of Fig. 5 also contains phonemes resembling them. Thus, there is, for instance, the nasalized phoneme Kn. This phoneme resembles the phoneme K which is also included and which is pronounced clearly. Another example is the phoneme Ar which primarily occurs at the end of words, as, for example, in the word "besser". This phoneme resembles the phoneme R which is also listed and which appears, for instance, in the word "Radio". All of these phonemes are natural ones.

In addition to those natural phonemes, there are artificial phonemes which resemble in each case at least two natural phonemes. Thus, for instance, an artificial phoneme K1n is provided which resembles the two natural phonemes K and Kn. In the same manner, an artificial phoneme A1r is provided which resembles the natural phonemes R and Ar. Finally, an artifical phoneme E0 is provided which resembles the natural phoneme E and which simultaneously denotes instances where the natural phoneme E is swallowed by the speaker, as, for example, in words ending with "-en".

These artificial phonemes are not actually uttered by the speaker. They rather denote the different ways in which they might be uttered by the speaker. During the laboratory and the speaker-dependent training, the speakers dictate predetermined words from which the computer system generates the label sequence of the afore-mentioned artificial phonemes by statistical methods and models. In conjunction with a text subsequently dictated by the speaker, the computer recognizes such label sequences and thus the associated artificial phonemes.

In the absence of such artificial phonemes, the computer system would have to store any conceivable phoneme sequence of a particular word. For the word "staerken", for example, the following phoneme sequences would have to be stored:

SCH-T-AE-R-K-E-N
SCH-T-AE-R-Kn-E-N
SCH-T-AE-R-K-N
SCH-T-AE-Ar-K-E-N
SCH-T-AE-Ar-Kn-E-N
SCH-T-AE-Ar-K-N.

When the indicated artificial phonemes are used, only one phoneme sequence has to be stored for the word "staerken" in the memory 13 of the computer system (see table illustrated in Fig. 6). In this table, phonemes R and Ar resembling each other are replaced by the artificial phoneme A1r. Equally, the natural phonemes K and Kn resembling each other are replaced by the artificial phoneme K1n. In place of the natural phoneme E and in cases where this phoneme is suppressed, the artifical phoneme E0 is provided. In this manner, six different phoneme sequences for one and the same word are replaced by a single artificial phoneme sequence.

As a result, the memory space required for different phoneme sequences of words is substantially reduced. The computer system has to carry out much fewer operations for comparing the words dictated by the speaker with phoneme sequences of words stored in memory 13. This, in turn, increases the processing speed of the computer system.

By using artificial phonemes, the number of words to be stored in memory 13 of the computer system as well as the number of phoneme sequences are substantially reduced. This means that the number of words and phoneme sequences to be checked for speech recognition is equally reduced. As a result, the processing speed of the computer system is increased and the computer system is capable of operating in the real time mode.

**Claims**

1.  Computer system for speech recognition,

    comprising means (10, 11, 15) for converting spoken words into phonemes,

    means (13, 15) for storing words in a phonetic baseform, the phonetic baseform including a number of natural phonemes, and

    means for comparing the converted and the stored phonemes,

    characterized in that the phonetic baseform of the words also comprises a number of artificial phonemes.

2.  Computer system as claimed in claim 1,

    characterized in that

    a first silent phoneme (x), associated with the speech pause between two words, is provided as a natural phoneme,

    and that a second silent phoneme (z), associated with the speech pause between two components of a compound word, is provided as an artificial phoneme.

3. Computer system as claimed in claim 2,

   characterized in that means for combining components of a compound word are provided.

4. Computer system as claimed in any one of the claims 1 to 3,

   characterized in that an artificial phoneme (K1n, A1r, E0) is provided which resembles at least two natural phonemes (K, Kn, R, Ar, E).

5. Computer system as claimed in claim 4,

   characterized in that a word or a component of a compound word, whose phonetic baseform may consist of at least two sequences of similar phonemes, is represented by the associated artificial phoneme(s).

FIG. 1

20 ms

FIG. 2

$V = (W1, W2, ..., W19, W20)$

FIG. 3

## FIG. 4

## FIG. 5

| PHONEME | LABEL SEQUENCE |
|---------|----------------|
| SCH | L157−L27−L89−L112 |
| L | L12−L17−L97 |
| A | L47−L172− · · · |
| V | · · · |
| O | · · · |
| T | · |
| AE | · |
| N | · |
| ⋮ | |
| K | |
| Kn | |
| K1n | |
| ⋮ | |
| R | |
| Ar | |
| A1r | |
| ⋮ | |
| E | ⋮ |
| EO | ⋮ |
| ⋮ | |
| X | L129−L53−L52−L76 |
| Z | L151−L129−L9 |

## FIG. 6

| WORD | PHONE SEQUENCE |
|------|----------------|
| SCHLAG | z−SCH−L−A−K−z |
| WORT | z−V−O−R−T−z |
| STARKEN | SCH−T−AE−A1r_K1n−EO−N−x |